# FASCICULE DE BREVET EUROPEEN

(11) **EP 4 263 357 B1**
(45) Date de publication et mention de la délivrance du brevet: **22.04.2026**
(21) Numéro de dépôt: 21836096.4
(22) Date de dépôt: 09.12.2021
(51) Int. Cl.: B64F 5/60, G01D 18/00

(54) **SYSTÈME DE TEST POUR AU MOINS UN INSTRUMENT DE NAVIGATION D'AÉRONEF**
TESTSYSTEM FÜR MINDESTENS EIN FLUGZEUGNAVIGATIONSINSTRUMENT
TEST SYSTEM FOR AT LEAST ONE AIRCRAFT NAVIGATION INSTRUMENT

(30) Priorité: 18.12.2020 FR 2013670
(43) Date de publication de la demande: 25.10.2023
(73) Titulaire: ATEQ, 78340 Les Clayes-sous-Bois (FR)
(72) Inventeur: NATIVEL, Gabriel, 78340 Les Clayes-sous-Bois (FR); PLATEL, Frédéric, 78340 Les Clayes-sous-Bois (FR)
(74) Mandataire: Vidon Brevets & Stratégie
(86) Numéro de dépôt international: PCT/EP2021/084911
(87) Numéro de publication internationale: WO 2022/128718

(56) Documents cités:
- WO-A1-2019/096759
- CN-A- 105 091 834
- US-A- 5 023 791
- US-A1- 2018 290 766
- US-A1- 2019 382 140
- ANONYMOUS: "GE Digital Solutions GE Air Data Test Sets ADTS542F/552F/553F/554F User Manual K0553 Revision D", GE MEASUREMENT & CONTROL, 1 January 2016 (2016-01-01), pages 1 - 156, XP055489956, Retrieved from the Internet <URL:https://www.gemeasurement.com/sites/gemc.dev/files/adts542f_adts552f_user_manual_k0553_rev_d.pdf> [retrieved on 20180704]

## Description

La présente invention se rapporte au domaine des tests d'aéronefs, et plus particulièrement des systèmes de test d'au moins un instrument de navigation d'aéronef.

On notera qu'on entend par aéronef, tout moyen de transport capable de s'élever et de se mouvoir en altitude au sein de l'atmosphère terrestre, tel qu'un avion, un hélicoptère, un drone, un ULM, etc.

Un aéronef comprend ainsi des instruments de navigation ou instruments de bord permettant au pilote dirigeant ledit appareil de connaitre, par exemple, l'altitude, la vitesse, le taux de montée, etc.

Ces instruments de navigation sont généralement des moyens d'affichage reliés à un ou plusieurs capteurs. Un instrument de navigation fournit ainsi une valeur ou une information pertinente et interprétable par le pilote, l'information fournie par lesdits instruments se fondant sur au moins une valeur d'une grandeur physique mesurée par le ou les capteurs.

On notera qu'on entend par capteur, l'ensemble des éléments mécaniques et/ou électroniques qui permettent de mesurer une grandeur physique (par exemple une pression, une température, etc.) et dont la valeur permet d'afficher une information utile au pilote (par exemple une altitude, une vitesse, etc.).

Ainsi, l'altimètre donne une altitude (en mètres) en fonction des mesures de pression réalisées par l'intermédiaire des tubes de Pitot et/ou des ports statiques.

Ainsi pour garantir la sécurité de l'aéronef, du pilote, des passagers et garantir un fonctionnement optimal dudit aéronef, les instruments de navigation doivent être testés et calibrés à intervalles réguliers à l'aide de systèmes adéquats, tels que des systèmes de test d'instruments de navigation d'aéronef.

On peut citer comme exemple d'instruments de navigation, les instruments de navigation reliés au système anémométrique de l'aéronef, tel que des ports statiques et/ou des tubes de Pitot. Ces instruments de navigation, comme l'altimètre, le variomètre, et/ou l'indicateur de vitesse, se fondent ainsi sur les valeurs de pression mesurées par l'intermédiaire d'un port statique et/ou d'un tube de Pitot pour fournir des valeurs d'altitude, de vitesse, etc.

Un système de test comprend généralement plusieurs parties, un dispositif de test (par exemple un générateur de pression anémobarométrique) qui vient se fixer sur les capteurs associés aux instruments de navigation qu'on souhaite tester et un dispositif distant ou sans fil. Ledit dispositif distant permet notamment à l'opérateur de superviser le test en étant situé à proximité des instruments de navigation et de vérifier la valeur fournie par lesdits instruments lors du test.

En effet, le dispositif de test agit sur le ou les capteurs associés à un instrument de navigation, notamment en modifiant l'état du capteur de sorte que l'instrument de bord fournisse une certaine valeur. Cette valeur doit alors être vérifiée par l'opérateur et doit correspondre à une valeur prédéterminée, généralement définie par le fabricant de l'aéronef. Cette valeur prédéterminée peut également être accompagnée d'une marge (ou seuil) d'erreur acceptable, la valeur fournie lors du test par l'instrument devant se trouver alors dans la plage de valeurs définie par la valeur prédéterminée et sa marge d'erreur pour que l'opérateur considère que l'instrument de navigation et son capteur associé fonctionnent correctement et/ou ne nécessitent pas d'être réparés ou calibrés.

On notera qu'on entend par modifier l'état du capteur, le fait de faire varier la valeur de la grandeur physique mesurée par ledit capteur. Ainsi, par exemple, en appliquant une dépression ou une surpression à des tubes Pitot et/ou des ports statiques, il est possible de faire varier la valeur d'altitude affichée par l'altimètre, simulant ainsi l'ascension en altitude de l'aéronef.

Il y a un grand nombre d'aéronefs (avions, drones, etc.), chaque modèle d'aéronef ayant des spécifications particulières, donc des valeurs prédéterminées et des marges d'erreur acceptables différentes.

Chacun des instruments de mesure est configuré pour fournir des informations interprétables par le pilote, cependant il est nécessaire que ces valeurs soient suffisamment correctes. Par exemple, un couloir de vol pour un avion de ligne est d'environ 1000 pieds (soit environ 305 m), il est ainsi recommandé que l'erreur sur l'altimètre soit bien inférieure, afin d'éviter une éventuelle collision, car l'avion n'est pas dans son couloir de vol.

Ainsi, normalement, l'opérateur doit consulter le manuel ou les abaques pour chacun des aéronefs testés et vérifier en conséquence que la valeur fournie est correcte.

L'opérateur doit ainsi faire attention à bien se rapporter aux bonnes spécifications (ou abaques), lire et retranscrire correctement la valeur fournie par l'instrument de bord, puis calculer que l'écart à la valeur prédéterminée attendue est compris dans la marge d'erreur acceptable telle que définie par le constructeur.

On notera par ailleurs qu'il existe déjà dans le commerce des systèmes de test d'instruments de navigation d'aéronef, comme ceux mentionnés dans le « User Manual K0553 Revision D », ou dans la demande de brevet US 2018/029766 A1 qui divulgue, selon son abrégé, un système permettant de vérifier une valeur d'instrumentation d'aéronef comprenant : un module de test de données aérodynamiques (ADTM) configuré pour simuler pneumatiquement au moins une valeur d'instrumentation sur la base d'un point de consigne de pression. La valeur d'instrumentation simulée pneumatiquement correspond au point de consigne de pression et est signalée par un transpondeur d'aéronef. Un module récepteur reçoit la valeur d'instrumentation simulée pneumatiquement transmise par le transpondeur de l'avion. Un processeur de signal est opérationnel pour contrôler l'ADTM, commander une valeur d'instrumentation prescrite à simuler par l'ADTM, comparer la valeur d'instrumentation prescrite à la valeur d'instrumentation simulée pneumatiquement, et émettre un signal de réussite lorsque les valeurs correspondent, et un signal d'échec lorsque les valeurs diffèrent d'une valeur seuil. US2018290766A1, selon son abrégé, divulgue un système permettant de vérifier une valeur d'instrumentation d'aéronef comprenant : un module de test de données aérodynamiques (ADTM) configuré pour simuler pneumatiquement au moins une valeur d'instrumentation sur la base d'un point de consigne de pression. La valeur d'instrumentation simulée pneumatiquement correspond au point de consigne de pression et est signalée par un transpondeur d'aéronef. Un module récepteur reçoit la valeur d'instrumentation simulée pneumatiquement transmise par le transpondeur de l'avion. Un processeur de signal est opérationnel pour contrôler l'ADTM, commander une valeur d'instrumentation prescrite à simuler par l'ADTM, comparer la valeur d'instrumentation prescrite à la valeur d'instrumentation simulée pneumatiquement, et émettre un signal de réussite lorsque les valeurs correspondent, et un signal d'échec lorsque les valeurs diffèrent d'une valeur seuil.

On constate donc que de nombreuses erreurs humaines peuvent survenir lors des tests d'instruments de navigation, c'est pour cela que la présente invention se propose notamment de fiabiliser le processus de test des instruments de navigation d'aéronef en proposant un nouveau système de test d'au moins un instrument de navigation d'aéronef, ledit système comprenant :
- un dispositif de test apte à être relié à au moins un capteur sur lequel l'instrument de navigation se fonde pour fournir une valeur, ledit dispositif de test étant configuré pour tester ledit capteur en modifiant son état ;
- une base de données comprenant au moins une valeur prédéterminée correspondant à une valeur devant être fournie par ledit instrument de navigation lors de la modification de l'état du capteur associé audit instrument de navigation par ledit dispositif de test.

Ladite base de données permet ainsi à l'opérateur effectuant le test de l'instrument de navigation de comparer la valeur fournie par ledit instrument à la valeur prédéterminée dans la base de données du système de test, limitant ainsi le risque d'erreur de l'opérateur.

Selon une caractéristique possible, ladite base de données comprend des valeurs prédéterminées pour plusieurs instruments de navigation. Avantageusement, plusieurs valeurs prédéterminées sont mémorisées pour un ou plusieurs instruments de navigation par exemple en fonction des aéronefs, de la température, de l'altitude, etc.

Selon une autre caractéristique possible, ladite base de données comprend également une marge d'erreur acceptable pour chaque valeur prédéterminée.

Il est avantageux que les seuils d'erreur ou les marges d'erreur soient stockés dans la base de données, facilitant à l'opérateur le fait de déterminer si la valeur fournie par l'instrument de navigation est comprise dans une plage de valeurs définie de la manière suivante, la valeur prédéterminée plus ou moins la marge d'erreur associée, et que l'opérateur puisse conclure à la conformité ou non de l'instrument de navigation testé.

On notera que la marge d'erreur peut être une valeur fixe ou un pourcentage de la valeur fournie par ledit instrument (et également dépendre de paramètres environnementaux, tels que la température, l'humidité, l'altitude, etc.). À titre d'exemple, la valeur de pression recueillie par l'intermédiaire des tubes de Pitot et/ou des ports statiques peut être très variable en fonction de l'altitude du lieu et de la météo, il est donc important de prendre en compter ses paramètres lors du réglage des instruments de navigation reliés au système anémobarométrique.

Selon une autre caractéristique possible, ladite base de données relative audit au moins un instrument de navigation est organisée par marque et modèle d'aéronef.

Le fait que la base de données comporte des valeurs prédéterminées accompagnées des marges d'erreur organisées (ou classées) par marque et modèle d'aéronef permet à l'opérateur de retrouver rapidement et facilement les valeurs pertinentes lors du test des instruments de navigation.

On notera que lesdites valeurs prédéterminées et les marges d'erreur sont par exemple mémorisées au préalable dans ladite base de données, notamment en se basant sur les données fournies par les constructeurs d'aéronefs. On peut également prévoir une mise à jour à distance de ladite base de données.

Selon une autre caractéristique possible, ledit système est configuré pour comparer la valeur fournie par l'instrument de navigation lors d'un test à la valeur prédéterminée correspondante stockée dans ladite base de données. L'opérateur entre la valeur fournie par ledit instrument de navigation dans le système, par exemple après avoir indiqué la marque et le modèle d'aéronef testé, le système comparant alors automatiquement la valeur fournie à la valeur prédéterminée stockée dans la base de données. Cela a pour conséquence de limiter les erreurs humaines, comme une erreur de saisie ou une erreur d'inattention.

Selon une autre caractéristique possible, le système est configuré pour valider la comparaison si la comparaison de la valeur fournie par l'instrument de navigation lors d'un test à la valeur prédéterminée correspondante stockée dans ladite base de données est inférieure ou égale à la marge d'erreur acceptable associée à ladite valeur prédéterminée dudit au moins un instrument de navigation.

Selon une autre caractéristique possible, chaque comparaison et résultat de comparaison est mémorisé.

Dans ce cas, les tests, comparaisons et résultats de comparaison peuvent être stockés dans une mémoire du système et/ou sur un serveur distant. Cela permet notamment d'avoir un suivi sur les tests effectués, leurs fréquences, etc.

Selon une autre caractéristique possible, chaque résultat de comparaison mémorisé comprend en outre un horodatage et/ou une mémorisation de l'identifiant de l'opérateur ayant effectué le test dudit au moins un instrument de navigation.

Il est avantageux d'horodater et/ou de pouvoir identifier l'opérateur ayant effectué le test dans le cadre d'un suivi qualité des aéronefs testés, mais également des opérateurs.

On notera qu'on entend par horodatage, le fait d'associer une date et une heure à un événement, ici le test d'un instrument de navigation.

Selon une autre caractéristique possible, chaque résultat de comparaison est associé à une information permettant d'identifier l'aéronef testé, tel qu'un numéro de série, la marque, le modèle, etc.

Selon une autre caractéristique possible, ledit système comprend une interface homme-machine configurée pour permettre d'entrer la valeur fournie, lors d'un test, par l'instrument de navigation dans ledit système de test.

L'interface homme-machine est, par exemple, un clavier avec un écran, un écran tactile, un logiciel à reconnaissance de commandes vocales, etc.

Selon une autre caractéristique possible, ledit système comprend un moyen d'acquisition de la valeur fournie, lors d'un test, par ledit au moins instrument de navigation.

Le fait que ledit système de test comprenne un moyen d'acquisition indépendant de l'opérateur permet notamment de renforcer la fiabilité des tests et de limiter davantage les risques d'erreur.

On notera qu'on entend par moyen d'acquisition tout moyen permettant d'acquérir ou d'enregistrer la valeur fournie par l'instrument lors du test. Le moyen d'acquisition peut par exemple être un moyen de communication avec l'ordinateur de bord de l'aéronef ou avec l'instrument de navigation, afin de pouvoir recueillir directement la valeur fournie par ledit instrument.

Selon une autre caractéristique possible, ledit moyen d'acquisition est un moyen d'acquisition d'images, tel qu'une caméra ou un appareil photo.

Ledit moyen d'acquisition peut aussi être avantageusement un moyen d'acquisition d'image d'un ou plusieurs instruments de navigation.

Selon une autre caractéristique possible, ledit moyen d'acquisition est configuré pour acquérir une pluralité d'images fournies par ledit au moins un instrument de navigation, ledit système étant configuré pour déterminer, après un traitement numérique desdites images, la valeur fournie, lors d'un test, par ledit au moins un instrument de navigation.

Selon une autre caractéristique possible, ledit système est configuré pour tester au moins un ou plusieurs des instruments de navigation suivants : altimètre, variomètre, indicateur de vitesse, système de géolocalisation, sonde d'incidence, transpondeur, indicateur d'assiette.

Selon une autre caractéristique possible, ledit système comprend un dispositif sans fil configuré pour commander le dispositif de test.

Ledit dispositif sans fil est avantageusement configuré pour communiquer à distance avec le dispositif de test et/ou se connecter à internet.

Selon une autre caractéristique possible, ledit dispositif sans fil comprend ladite interface homme-machine.

L'invention sera mieux comprise, et d'autres buts, détails, caractéristiques et avantages de celles-ci apparaîtront plus clairement au cours de la description suivante d'un mode de réalisation particulier de l'invention, donnée uniquement à titre illustratif et non limitatif, en référence aux dessins annexés, sur lesquels :
[Fig. 1], est une représentation très schématique d'un système de test selon l'invention en opération sur un avion ;
[Fig. 2], est une représentation très schématique du système de test de la figure 1 et de sa connectivité.

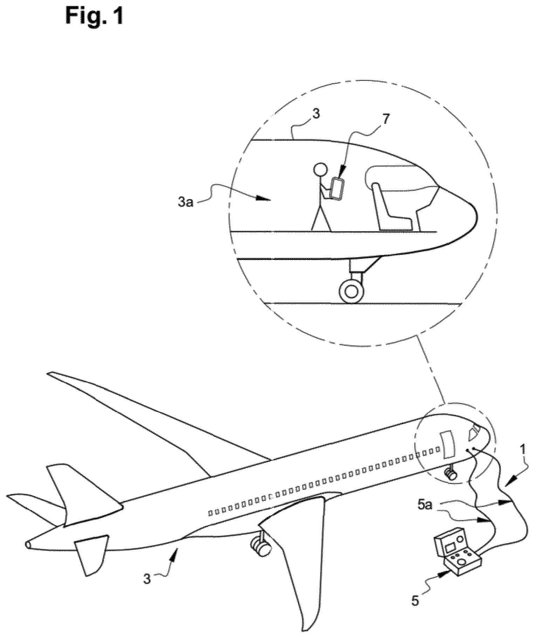

La figure 1 est ainsi une représentation schématique d'un système de test 1 pour instrument de navigation d'aéronef 3, tel qu'un avion de ligne.

Ledit système de test 1 comprend ainsi, dans ce mode de réalisation :
- un dispositif de test 5 apte à être relié à au moins un capteur sur lequel l'instrument de navigation se fonde pour fournir une valeur ;
- un dispositif sans fil 7 comprenant une interface homme-machine, tel qu'une télécommande, une tablette, un téléphone portable ou tout autre dispositif électronique adéquat ;
- une base de données comprenant au moins une valeur prédéterminée correspondant à une valeur devant être fournie par ledit instrument de navigation lors de la modification de l'état du capteur associé audit instrument de navigation par ledit dispositif de test.

L'exemple illustré ici par la [Fig. 1] se rapporte notamment aux tests d'instruments de navigation liés au système anémométrique de l'avion 3, c'est-à-dire aux ports statiques et/ou aux tubes de Pitot dudit avion.

Ces instruments de navigation sont par exemple l'altimètre, le variomètre, l'indicateur de vitesse, etc.

On notera cependant que le système selon l'invention peut également s'appliquer à d'autres instruments de navigation, tel que le système de géolocalisation, l'indicateur d'assiette, le transpondeur, la sonde d'incidence, etc.

Le dispositif de test 5 se présente ainsi sous la forme d'une valise comprenant des sources de pression (ou un générateur de pression anémobaromètrique) et des tuyaux 5a permettant de se connecter aux ports statiques et/ou tubes de Pitot afin de faire varier la pression appliquée à ces éléments.

Ledit dispositif de test 5 est donc configuré pour tester un instrument de navigation en modifiant l'état du capteur qui lui est associé, ici un tube de Pitot et/ou un port statique.

Ladite base de données est, dans ce mode de réalisation, stockée dans le dispositif sans fil 7, afin de permettre à l'opérateur effectuant le test de l'instrument de navigation de comparer la valeur fournie par ledit instrument à la valeur prédéterminée dans la base de données. La base de données peut également être stockée dans le dispositif de test 5 ou sur un serveur distant accessible à distance par l'intermédiaire du dispositif sans fil 7.

Ladite base de données comprend de préférence des valeurs prédéterminées et leurs marges d'erreur acceptables pour un ou plusieurs instruments de navigation de différents aéronefs, ladite base de données desdites valeurs étant organisée par marque et modèle d'aéronef. Lesdites valeurs prédéterminées et leurs marges d'erreur sont par exemple issues des abaques et données fournies par les constructeurs d'aéronefs, mais peuvent être également entrées manuellement par l'opérateur dans ladite base.

Les valeurs prédéterminées mémorisées dans la base de données peuvent également être variables en fonction de paramètres environnementaux, tels que la température, le degré d'humidité, l'altitude, etc.

Lesdits paramètres environnementaux sont par exemple entrés dans le système 1 par l'opérateur ou alors mesurés directement par des capteurs adaptés (par exemple un capteur de température, un hygromètre, etc.) qui sont logés dans le dispositif de test 5 et/ou le dispositif sans fil 7.

On notera qu'on entend par marge d'erreur ou seuil d'erreur, l'erreur acceptable pour que l'on considère que l'instrument de navigation fonctionne correctement, la marge d'erreur peut être une valeur fixe ou un pourcentage de la valeur fournie par ledit instrument.

L'interface homme-machine dudit dispositif 7, tel qu'un clavier, un écran tactile ou non, etc. est notamment configurée pour permettre (à l'opérateur) d'entrer la valeur fournie, lors d'un test, par l'instrument de navigation dans ledit système de test 1.

Dans une variante de réalisation non représentée de l'invention, ledit dispositif sans fil 7 comprend de plus un moyen d'acquisition de la valeur fournie par au moins un desdits instruments de navigation lors du test.

Ledit moyen d'acquisition est par exemple une caméra, mais peut être tout moyen d'acquisition permettant d'acquérir la valeur fournie par un instrument de navigation, tel qu'un appareil photographique.

On notera ainsi qu'on entend par moyen d'acquisition tout moyen (ou interface) permettant d'acquérir ou d'enregistrer la valeur fournie par l'instrument lors du test. Le moyen d'acquisition peut par exemple être un moyen (ou une interface) de communication avec l'ordinateur de bord de l'aéronef ou avec l'instrument de navigation, afin de pouvoir recueillir directement la valeur fournie par ledit instrument.

La caméra dudit dispositif sans fil est un moyen d'acquisition d'images d'un ou plusieurs instruments de navigation qui est configurée pour acquérir une pluralité d'images d'au moins un instrument de navigation. Lesdites images sont ensuite traitées numériquement pour déterminer la valeur fournie ou affichée par ledit au moins un instrument de navigation. Le traitement numérique peut être réalisé par le dispositif sans fil, le dispositif de test et/ou sur un serveur distant où lesdites images sont stockées.

Le dispositif sans fil 7 peut également comprendre plusieurs moyens d'acquisition d'images, tels qu'une caméra et une interface se connectant à l'ordinateur de bord de l'aéronef, permettant d'avoir une double vérification et de détecter des erreurs liées à l'affichage de la valeur par l'instrument de navigation. Ledit système peut également nécessiter que l'opérateur entre la valeur fournie lors du test par l'instrument de navigation en addition des valeurs acquises par un ou plusieurs moyens d'acquisition, ceci afin de rendre plus robustes les tests desdits instruments de navigation.

L'opérateur peut également valider la valeur proposée par le système (c'est-à-dire la valeur acquise par l'intermédiaire du moyen d'acquisition) ou le cas échéant entrer une autre valeur.

La ou les valeurs fournies par l'instrument de navigation lors d'un test sont alors comparées à la valeur prédéterminée correspondante stockée dans ladite base de données.

Le système 1 est configuré pour valider la comparaison en tenant compte de la marge d'erreur acceptable associée à ladite valeur prédéterminée dudit au moins un instrument de navigation. Plus particulièrement, le système est configuré pour valider la comparaison, si la comparaison de la valeur fournie par l'instrument de navigation lors d'un test à la valeur prédéterminée correspondante stockée dans ladite base de données est inférieure ou égale à la marge d'erreur acceptable associée.

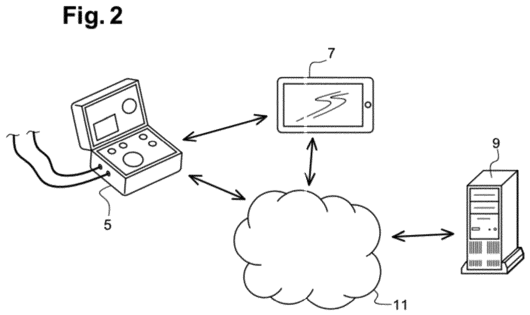

Chacune des comparaisons et des résultats de comparaison sont mémorisés dans une mémoire (non représentée) du système 1. Par ailleurs, comme illustré à la [Fig. 2], lesdites comparaisons et résultats de comparaison sont de préférence envoyés sur un serveur distant 9 en vue d'être stockés (par exemple pour un traitement ultérieur).

De plus, chaque résultat de comparaison mémorisé peut également comprendre un horodatage et/ou l'association de l'identifiant de l'opérateur ayant effectué le test dudit au moins un instrument de navigation.

Ainsi, lors d'un test, l'opérateur relie le dispositif de test 5 aux capteurs adéquats et se positionne ensuite dans le cockpit 3a de l'avion 3 avec le dispositif sans fil 7. Lesdits capteurs sont par exemple les tubes de Pitot, les ports statiques, la puce GPS, etc. Le capteur sur lequel vient se fixer le dispositif de test dépendant bien sûr de l'instrument de navigation testé.

Puis, l'opérateur lance alors le test par l'intermédiaire du dispositif sans fil 7, lesdits dispositifs 5 et 7, tels qu'illustrés à la [Fig. 2] pouvant communiquer l'un avec l'autre par un moyen de communication sans fil, tel que du wifi, du Bluetooth, des ondes radio, etc.

On notera par ailleurs que lesdits dispositifs 5 et 7 peuvent avantageusement envoyer des données au serveur distant 9 pour stockage, par exemple par l'intermédiaire d'un réseau informatique 11 (local ou non). Les données envoyées sont par exemple relatives aux mesures effectuées, des résultats de comparaison, les actions effectuées, l'état des dispositifs, etc.

L'opérateur positionne le moyen d'acquisition, tel qu'une caméra, du dispositif sans fil 7 en regard de l'instrument de navigation testé, par exemple suite à une indication du dispositif sans fil 7. Cette opération s'effectue par exemple à la suite d'instructions fournies par l'intermédiaire de l'interface homme-machine dudit dispositif 7.

Le moyen d'acquisition du dispositif 7 en coopération avec le dispositif de test 5 détermine la valeur fournie par l'instrument de navigation testé.

Ladite valeur acquise par ledit moyen d'acquisition est alors comparée à la valeur prédéterminée adéquate présente dans la base de données, en tenant compte de la marge d'erreur associée.

Ainsi, si la valeur acquise est comprise dans la plage de valeurs, plage définie par la valeur prédéterminée plus ou moins la marge d'erreur, le système 1 indique à l'opérateur que le résultat du test est correct.

Dans le cas contraire, l'opérateur est averti que l'instrument de navigation testé et/ou ses capteurs associés sont peut-être défectueux et nécessitent un examen plus approfondi, et éventuellement des réparations ou une calibration.

## Revendications

1. Système de test (1) d'au moins un instrument de navigation d'aéronef (3), ledit instrument (3) testé étant au moins un ou plusieurs des instruments de navigation suivants :
altimètre, variomètre, indicateur de vitesse,
ledit système (1) comprenant :
- un dispositif de test (5) apte à être relié à au moins un capteur sur lequel l'instrument de navigation se fonde pour fournir une valeur, ledit dispositif de test étant configuré pour tester ledit capteur en modifiant son état ;
- un dispositif sans fil (7) comprenant une interface homme-machine et un moyen d'acquisition d'images, ledit dispositif sans fil étant configuré pour commander le dispositif de test (5) et pour acquérir via le moyen d'acquisition d'image la valeur fournie, lors d'un test, par ledit au moins instrument de navigation (3) ;
- une base de données comprenant au moins une valeur prédéterminée correspondant à une valeur devant être fournie par ledit instrument de navigation (3) lors de la modification de l'état dudit au moins un capteur associé audit instrument de navigation par ledit dispositif de test (5),
ledit système étant configuré pour comparer la valeur fournie par ledit instrument de navigation (3) lors d'un test à la valeur prédéterminée correspondante stockée dans ladite base de données.

2. Système selon la revendication 1, **caractérisé en ce que** ladite base de données comprend également des informations sur une marge d'erreur acceptable pour chaque valeur prédéterminée.

3. Système selon l'une quelconque des revendications 1 à 2, **caractérisé en ce que** ladite base de données relative audit au moins un instrument de navigation est organisée par marque et modèle d'aéronef.

4. Système selon l'une quelconque des revendications précédentes, caractérisé que le système est configuré pour valider la comparaison, si la comparaison de la valeur fournie par l'instrument de navigation lors d'un test à la valeur prédéterminée correspondante stockée dans ladite base de données est inférieure ou égale à la marge d'erreur acceptable associée à ladite valeur prédéterminée dudit au moins un instrument de navigation.

5. Système selon la revendication 4, **caractérisé en ce que** chaque comparaison et résultat de comparaison est mémorisé.

6. Système selon la revendication 5, **caractérisé en ce que** chaque résultat de comparaison mémorisé comprend en outre un horodatage et/ou une mémorisation de l'identifiant de l'opérateur ayant effectué le test dudit au moins un instrument de navigation.

7. Système selon l'une quelconque des revendications précédentes, **caractérisé en ce que** l'interface homme-machine est configurée pour permettre d'entrer la valeur fournie, lors d'un test, par l'instrument de navigation dans ledit système de test.

8. Système (1) selon la revendication précédente, **caractérisé en ce que** le système (1) est configuré pour qu'un opérateur entre la valeur fournie par l'instrument de navigation lors du test en addition des valeurs acquises par ledit moyen d'acquisition ou valide la valeur acquise par l'intermédiaire du moyen d'acquisition.

9. Système selon l'une quelconque des revendications précédentes, **caractérisé en ce que** les valeurs prédéterminées mémorisées dans la base de données peuvent également être variables en fonction de paramètres environnementaux, tels que la température, le degré d'humidité, l'altitude.

10. Système selon l'une quelconque des revendications précédentes, **caractérisé en ce que** ledit moyen d'acquisition est configuré pour acquérir une pluralité d'images fournies par ledit au moins un instrument de navigation (3), ledit système (1) étant configuré pour déterminer, après un traitement numérique desdites images, la valeur fournie, lors d'un test, par ledit au moins un instrument de navigation (3).

## Patentansprüche

1. Testsystem (1) für mindestens ein Flugzeugnavigationsinstrument (3), wobei das getestete Instrument (3) mindestens ein oder mehrere der folgenden Navigationsinstrumente ist: Höhenmesser, Variometer, Geschwindigkeitsanzeiger,
wobei das System (1) umfasst:
- eine Testvorrichtung (5), die imstande ist, mit mindestens einem Sensor verbunden zu werden, auf den sich das Navigationsinstrument stützt, um einen Wert bereitzustellen, wobei die Testvorrichtung konfiguriert ist, um den Sensor durch Ändern seines Zustands zu testen;
- eine drahtlose Vorrichtung (7), die eine Mensch-Maschinen-Schnittstelle und ein Bilderfassungsmittel umfasst, wobei die drahtlose Vorrichtung konfiguriert ist, um die Testvorrichtung (5) zu steuern und über das Bilderfassungsmittel den Wert zu erfassen, der während eines Tests von dem mindestens einen Navigationsinstrument (3) bereitgestellt wird;
- eine Datenbank, die mindestens einen vorbestimmten Wert umfasst, der einem Wert entspricht, der von dem Navigationsinstrument (3) bei der Änderung des Zustands des mindestens einen dem Navigationsinstrument zugeordneten Sensors durch die Testvorrichtung (5) bereitzustellen ist,
wobei das System konfiguriert ist, um den von dem Navigationsinstrument (3) während eines Tests bereitgestellten Wert mit dem entsprechenden in der Datenbank gespeicherten vorbestimmten Wert zu vergleichen.

2. System nach Anspruch 1, **dadurch gekennzeichnet, dass** die Datenbank auch Informationen über eine akzeptable Fehlerspanne für jeden vorbestimmten Wert umfasst.

3. System nach einem der Ansprüche 1 bis 2, **dadurch gekennzeichnet, dass** die Datenbank in Bezug auf das mindestens eine Navigationsinstrument nach Marke und Modell des Flugzeugs organisiert ist.

4. System nach einem der vorstehenden Ansprüche, **dadurch gekennzeichnet, dass** das System konfiguriert ist, um den Vergleich zu validieren, wenn der Vergleich des von dem Navigationsinstrument bei einem Test bereitgestellten Werts mit dem entsprechenden in der Datenbank gespeicherten vorbestimmten Wert kleiner oder gleich der akzeptablen Fehlerspanne ist, die dem vorbestimmten Wert des mindestens einen Navigationsinstruments zugeordnet ist.

5. System nach Anspruch 4, **dadurch gekennzeichnet, dass** jeder Vergleich und jedes Vergleichsergebnis gespeichert werden.

6. System nach Anspruch 5, **dadurch gekennzeichnet, dass** jedes gespeicherte Vergleichsergebnis ferner einen Zeitstempel und/oder eine Speicherung der Kennung des Bedieners umfasst, der den Test des mindestens einen Navigationsinstruments durchgeführt hat.

7. System nach einem der vorstehenden Ansprüche, **dadurch gekennzeichnet, dass** die Mensch-Maschinen-Schnittstelle konfiguriert ist, um es zu ermöglichen, den bei einem Test vom Navigationsinstrument bereitgestellten Wert in das Testsystem einzugeben.

8. System (1) nach dem vorstehenden Anspruch, **dadurch gekennzeichnet, dass** das System (1) konfiguriert ist, damit ein Bediener den vom Navigationsinstrument während des Tests bereitgestellten Wert zusätzlich zu den von dem Erfassungsmittel erfassten Werten eingibt oder den über das Erfassungsmittel erfassten Wert validiert.

9. System nach einem der vorstehenden Ansprüche, **dadurch gekennzeichnet, dass** die in der Datenbank gespeicherten vorbestimmten Werte auch in Abhängigkeit von Umgebungsparametern, wie Temperatur, Feuchtigkeitsgrad und Höhe, variabel sein können.

10. System nach einem der vorstehenden Ansprüche, **dadurch gekennzeichnet, dass** das Erfassungsmittel konfiguriert ist, um eine Vielzahl von Bildern zu erfassen, die von dem mindestens einen Navigationsinstrument (3) bereitgestellt werden, wobei das System (1) konfiguriert ist, um nach einer digitalen Verarbeitung der Bilder den von dem mindestens einen Navigationsinstrument (3) bei einem Test bereitgestellten Wert zu bestimmen.

## Claims

1. A system (1) for testing at least one aircraft navigation instrument (3), said tested instrument (3) being at least one or more of the following navigation instruments: altimeter, variometer, speedometer,
said system (1) comprising:
- a test device (5) adapted to be connected to at least one sensor on which the navigation instrument relies to provide a value, said test device being configured to test said sensor by modifying its state;
- a wireless device (7) comprising a human-machine interface, as well as an image acquisition means, said wireless device (7) being configured to control the test device (5) and to acquire, via said image acquisition means, the value provided, during a test, by said at least navigation instrument (3);
- a database comprising at least one predetermined value corresponding to a value to be provided by said navigation instrument (3) upon modification of the state of said at least one sensor associated with said navigation instrument by said test device (5) said system being configured to compare the value provided by the navigation instrument (3) during a test with the corresponding predetermined value stored in said database.

2. The system according to claim 1, **characterised in that** said database also comprises information on an acceptable error margin for each predetermined value.

3. The system according to any one of claims 1 to 2, **characterised in that** said database relating to said at least one navigation instrument is organised by aircraft manufacturer and model.

4. The system according to any one of the preceding claims, **characterised in that** the system is configured to validate the comparison, if the comparison of the value provided by the navigation instrument during a test with the corresponding predetermined value stored in said database is lower than or equal to the acceptable error margin associated with said predetermined value of said at least one navigation instrument.

5. The system according to claim 4, **characterised in that** each comparison and comparison result is memorised.

6. The system according to claim 5, **characterised in that** each memorised comparison result further comprises a timestamp and/or a record of the identifier of the operator having performed the test of said at least one navigation instrument.

7. The system according to any one of the preceding claims, **characterised in that** the human-machine interface is configured to allow entering the value provided, during a test, by the navigation instrument into said test system.

8. The system (1) according to the preceding claim, **characterised in that** the system (1) is configured so that an operator enters the value provided by the navigation instrument during the test in addition to the values acquired by said acquisition means or validates the value acquired via the acquisition means.

9. The system according to any one of the preceding claims, **characterised in that** the predetermined values memorised in the database can also be variable according to environmental parameters, such as the temperature, the humidity level, the altitude.

10. The system according to any one of the preceding claims, **characterised in that** said acquisition means is configured to acquire a plurality of images provided by said at least one navigation instrument (3), said system (1) being configured to determine, after a digital processing of said images, the value provided, during a test, by said at least one navigation instrument (3). ]
